# EUROPEAN PATENT SPECIFICATION

(11) **EP 0 888 404 B1**
(45) Date of publication and mention of the grant of the patent: **27.09.2000**
(21) Application number: 97919865.2
(22) Date of filing: 17.04.1997
(51) Int. Cl.: C08L 23/00, A01G 9/14, B29C 71/00

(54) **UV RESISTANT PLASTIC FILM OR COATING USED FOR CLIMATE PROTECTION**
UV BESTÄNDIGER FILM ODER ÜBERZUG ZUR VERWENDUNG ALS WETTERSCHUTZ
FILM ET REVETEMENT EN MATIERE PLASTIQUE RESISTANT AUX UV POUR LA PROTECTION CONTRE LES INTEMPERIES

(30) Priority: 17.04.1996 SE 9601499
(43) Date of publication of application: 07.01.1999
(73) Proprietor: LUDVIG SVENSSON INTERNATIONAL B.V., NL-3225 LV Hellevoetsluis (NL)
(72) Inventor: ANDERSSON, Hans, S-511 56 Kinna (SE); ÖHRN, Lars, S-444 42 Stenungsund (SE)
(74) Representative: Hammond, Andrew David
(86) International application number: SE9700648
(87) International publication number: WO9739058

(56) References cited:
- EP-A- 0 421 233
- EP-A- 0 560 679
- WO-A-87/07464
- WO-A-90/09760
- GB-A- 191 505 833
- US-A- 3 732 382
- US-A- 4 539 440
- US-A- 5 367 025
- DIALOG INFORMATION SERVICES, File 351, Dialog Accession No. 009645843, WPI Accession No. 93-339392/43, NIPPON UNICAR CO. LTD., "Agricultural Laminated Film Prepn. Wiht Good Tear Strength and Impact Resistance - Composed of Ultra-Low Density of Ethylenel Alpha Olefin Copolymer Core Layer and Ethylenel Vinyl Acetate Skin Layers"; & JP,A,05 245 987, (24-09-93), 9343, (Basic).
- FILE WPI, Derwent Accession No. 79-44762B, SHOWA ELEC. WIRE K.K., "Weatherproof Crosslinked Moulding mfr. - by Mixing Silicon-Grafted Polyolefin With Masterbatch Contg. a Silanol Condensn. Catalyst and a Benzophenone, Extruding and Crosslinking"; & JP,A,54 055 045, (01-05-79), DW7924.

## Description

The present invention refers to a UV-resistant plastic film or coating on another carrier material and which in particular is intended as climate protection for example to be used in connection with plant growing, specially in greenhouse curtains, greenhouse films and cover material for outdoor growing, awning etc. These films have a major problem concerning their useful life, since the film is exposed to sunlight and to several chemicals used in for example plant growing.

### Background to the invention

To increase the life of such films it is known to use a light stabiliser of the kind which hindering amines (HALS- Hindered Amines Light Stabiliser). This is described in for example EP-A 0,214,507. These are very good stabilisers for thin films with long expected lifetimes. They are often combined with other types of stabilisers and also with UV-absorbents to further increase the life. The hindering amines are very reactive and quickly take care of the degradation products that are formed, and they are basic. This makes it easy for them to react with foreign substances which come in contact with the film and particular substances that are acidic, e.g. sulphur-, chlorine- and bromine-based compounds. In some greenhouses such chemicals are extensively used to protect the plant from various diseases and insects. When the hindering amines react with these chemicals their effects are lost and the film's UV-protection is knocked out. Some greenhouse film producers are limiting their warranties for the films life in connection with or exposure during longer periods of time for the following groups and substances, inse ticides, fungicides etc., more specifically substances containing bromine, chlorine, fluorine, iodine, sulphur, petroleum-products and wood protecting agent containing copper.

It is also known that films and coatings obtain shorter lives when they are exposed to so called acid rain, which may apply to awnings placed in environment with high level of air pollution. The producer of HALS-stabilisers market some types of stabilisers, that shall be suitable in such environments, so called 'acid rain resistant', but tests have shown that their effectiveness does not differ much from the other HALS-stabilisers.

Through JP-A-5245987 a laminated film intended for greenhouses and similar is known. It is said to have high tensile strength and to be transparent and heat-resistant. The film is made of EVA to which an unsaturated alkoxysilane has been grafted with help of a peroxide, whereafter the polymer was crosslinked. At the grafting the polymer chain is opened up with the peroxide where the silane-group is attached, which later is crosslinked. There is no information about any UV-resistance of this film and in our own experiments. In the examples it is shown that such silane grafted polyolefin does not have desired UV-resistance.

Fires can start in curtain structures in greenhouses and may spread very rapidly. A desire is therefor to obtain flame proof material, which also must fulfil all the other expectations such as UV-protection, long life etc. of greenhouse curtains.

### Object of the invention and its most important characteristics

The purpose with the present invention is to obtain a material suitable for plastic film or coating on another carrier material in greenhouse curtains, greenhouse films and cover material for out door greenhouse growing. As mentioned above, it may also have applications in other products, for example awnings and Venetian blinds, since these may too be exposed to acidic environment. The material shall be UV-stabile and not or only in very small degree be effected by exposure to the chemicals they are normally exposed to in a greenhouse environment and, it should also in some cases be flame resistant.

This has according to the present invention been obtained by using a film or a coating, which wholly or partially is composed of a crosslinked polyolefin containing silane groups that have been introduced in the polyolefin chain by a co-polymerisation process. This is a difference to a grafted polymer where the polyolefin chain is opened up for example by a peroxide, whereafter the silane groups are grafted and crosslinked.

Crosslinking of the polyolefin-silane-co-polymer is performed preferably by the influence of water and a silaneol condensations catalyst.

The polyolefin consists of preferably a polyethylene, for example low-density polyethylene, LDPE or some of its co-polymers for example EVA or EBA. The higher UV-stability is surprising since the material is almost an ordinary polyolefin co-polymer with the only difference that the molecules are crosslinked to each other, while properties such as crystallinity are almost unchanged. The polyolefin, preferably of the group polyethylene, can also contain one or more other co-monomers in addition to the silane-groups. Examples of such co-monomers are vinyl acetate, butyl acrylate, 1-buten and 1-okten.

In a multilayer film at least one of the layers shall consist of the crosslinked polyolefin-silaneco-polymer according to the invention, but other layers may consist of other materials, such as heat radiation absorbing material.

The film or coating can also be provided with additives. Examples of such additives are pigments, which make it transparent to some wave lengths of the sun light, and anti-fog agents such as glycerol stearate, glycerol ester or other products to avoid condense drops. The anti-fog agent might only be added to the outer layer. The film may also be of cellular type, where the ferment - or blow agent, organic or inorganic, is mixed in to the plastic when the film is produced, which creates cavities, closed or connected, when the blow agent is developed. Other examples of additives are mincible thermoplastics, stabilisation agent, lubricant and flame protective agents.

### Description of the invention

By the crosslinking of tha polyolefin-silane-co-polymer an endless three-dimensional molecular structure is built up, which gives the material advantages such as:
higher resistance to UV-radiation;
- higher chemical resistance;
- higher heat resistance;
- memory properties in the material, which results in less shrinking and a lower tendency to form permanent folds;
- higher break strength;
- better low temperature properties;
- and combinations of the above mentioned properties.

The polymer composition in the basic chain consists of a polyolefin-co-polymer containing hydrolysable silane groups. Such a polymer composition is described in for example SE-B-462 752.

Desired flame protectiveness is obtained by adding a flame protective agent to the plastic film or its produced strips, which may be composed of a halogen- or phosphor containing compound. These may be used without the level of UV-protection being reduced, which is the case, when using the so called HALS-stabilisers to obtain a satisfying life length. Another alternative is that the carrier material is composed of halogen- or phosphor containing plastic film or strips of such a film, which are treated with a layer of the crosslinked polyolefin-silane-co-polymer.

In the experiments described below a LDPE crosslinked with a vinyl trimethoxy silane is used. This polymer behaves as a 'normal' low density polyethylene with respect to extrusion properties. This mean that the polymer may be extruded to a film on a normal extruder without special rebuilding or additives in the form of special equipment. The crosslinking is obtained after extrusion in the presence of water and a catalyst. The production is described in the example below.

### Example 1

Production of a blown film containing a crosslinked polyethylene.

As crosslinked polymer we have used a silane corsslinked LDPE from Borealis, LE 4421, with addition of a catalyst in master batch form called LE 4436. LE 4421 is a commercial co-polymer where vinyltrimethoxysilane is polymerised in the chain. We have used 5% catalyst master batch. The polymer and the catalyst were mixed separately just before the extrusion, though this can also be done with the normal mixing equipment as is usually present on the extruder. An advantage with the later method it that one decreases the contact time between the polymer and the catalyst, thereby minimizing the risk for a too early crosslinkage, which creates gels in the film.

The polymer and the catalyst master batch were stored protected from damp and moisture at about 20 °C, to decrease the risk for a too early crosslinkage.

The film material with a density of 923 kg/m³ and a MFR₂ of 0,9 g/10 min was run at a temperature setting of the extruder's heat zones of 150-170 °C. The screw velocity was 112 rpm which gave a work force of 52 Amp, a melting pressure of 266 bar and a melting temperature of 178 °C.

To obtain a film with for us suitable properties, we used a blow up ratio of 1:2. The melting temperature was kept below 180 °C to avoid problems with gel formation. To protect the polymer from degradation during the extrusion it was stabilised by process stabilisers in the form of antioxidants.

### Example 2

Experiments were made to test the life at different plastic films, that were exposed to UV-radiation and sulphur/sulphur compounds.

The tests performed had as a goal to reflect as far as possible real conditions in greenhouses. The samples were first exposed to one day and one night of sulphur using a so called sulphur lamp, whereafter it was exposed in an Atlas Xenon Weather-Ometer Ci35 A. The conditions in the Weather-Ometer were: 0,35 W/m² at 340 nm, 23 h light/24 h. No water spraying. The conditions should reflect those in Florida. Samples were taken from the Weather-Ometer at regular intervals and were tested in a tensile tester (tensile velocity 100 mm/min) and controlled in an FT-IR to see the carbonyl accumulation at 1718 cm ⁻¹.

The films tested were:
1. 70 micron LDPE + HALS
2. 70 micron crosslinked LDPE-silane-co-polymer.

Below are the results obtained. They are based on tensile strength measurements.

**Table 1.**

| Time to 50% relative stretching | | |
|---|---|---|
| | 1 | 2 |
| A | 1400 h | > 1500 h |
| B | 470 h | > 1500 h |

In experiment A the film samples were exposed only to the Weather-Ometer. In experiment B the samples were first exposed 24 h to a sulphur lamp and thereafter to the Weather-Ometer.

As seen from experiments, the crosslinked film is very UV-stable irrespectively of whether it was exposed to sulphur or not. The uncrosslinked polymer had a good UV-stability when it was not exposed to sulphur, but after exposure the film's UV-stability decreased exponentially. If one wishes to increase the life of the crosslinked polymer it is of course possible to add a HALS-stabiliser to it. The stabiliser's effect at acidic environments may however be questioned.

### Example 3

The experiment was performed to compare the life of plastic films of HDPE, silane grafted HDPE and ethene/vinylsilane-co-polymer which has been exposed to UV-radiation.

The films were exposed in an Atlas Xenon Weather-Ometer Ci35A under the conditions: 0,35 W/m² at 340 nm, 23 h light/24 h. No water spraying. A simple mechanical test was performed continuously during the time the samples were ageing by taking them out and bending them. As long as this could be performed without the film sample broke or fell into pieces, the ageing continued. The time it took until the sample was broke or became fragile, is given in Table 2.

The films tested were:
50 micron HDPE
50 micron HDPE + HALS
A. 50 micron silane grafted HDPE
B. 50 micron silane grafted HDPE + HALS
   70 micron ethylene/vinylsilane co-polymer
C. 50 micron ethylene/vinylsilane co-polymer + HALS
D. 50 micron 50/50 (ethylene/vinylsilane co-polymer + HDPE)
E. 50 micron 50/50 (ethylene/vinyl silane co-polymer + HDPE) + HALS

Below are the results obtained.

**Table 2.**

| Time until the the samples became fragile. | | | | |
|---|---|---|---|---|
| A * | B * | C | D | E |
| 1000h | 1450h | 1300h | 1300h | >5000h |

| | | | | |
|---|---|---|---|---|
| * Comparative examples | | | | |

As seen surprisingly good results were obtained with the ethylene/vinyl co-polymer compared to the silane grafted polyethylene.

The material according to the invention can as already mentioned be in the form of a film or in the form of a coating on another carrier material. The thickness is preferably <500 micron. With films we refer to both continuous films and small film strips, which can be used in greenhouse curtains. The film can be of multiple layer type were at least one of the layers is composed of crosslinked polyolefin-silane-co-polymer according to the invention, while other layers may be of other material, for example heat absorbing material. Example of such materials are the polyethylene-co-polymers EVA and EBA.

The film can be pigmented to obtain selective screening of the sunlight to affect plant growth. With this we mean it is transparent only to some wave lengths of the sunlight. Examples of such pigments are interference pigments as described in WO 95/05727. Also addition of UV-absorbents is a possibility, particularly of benzophenon or benzotriazol type. It may also contain so called anti-fog agents to avoid condensation droplets. The anti-fog agent may be added to only the surface layer of the film.

The film may also be a so called cell type, with which we mean a plastic film where a ferment- or bubble component, organic or inorganic, is mixed in to the plastic when the film is produced, which creates cavities or bubbles, closed or connected, when the bubbling component is broken down.

An example of how the film can be used is as foldable climate protection curtains or awnings of that kind which comprises with each other connected strips. The strips can be either plaited together or with each other and/or connected through a system of yarn threads, for example through a knitting or weaving process. One example of such a climate protection curtain is described in EP 0 109 951. The strips shall here at least partly contain the UV-resistant plastic film according to this invention.

Another example on the use of the invention is as foldable water proof climate protection curtains or awnings of the kind that comprises of with each other connected strips, yam treads or a combination of strips and yarn treads, where the curtain on at least one side has a water proof layer wholly or partially composed of the UV-resistant plastic film according to the invention.

At least a part of the strips in the climate curtain or awning can be light permeable. The strips may have an additive of a flame protective agent.

The invention is of course not limited to the described examples, but several modifications are possible within the scope of claims.

## Claims

1. UV-resistant plastic film or coating on another carrier material, **characterized in**, that it wholly or partly is composed of a crosslinked polyolefin containing silane groups that have been introduced in the polyolefin chain by a co-polymerisation process.

2. Plastic film or coating according to claim 1, **characterized in**, that the crosslinked polyolefin consists of a polyethylene, particularly LDPE (low-density polyethylene) and/or HDPE (high-density polyethylene), or any of its co-polymers, e.g. EVA (ethylenevinyl acetate) or EBA (ethylenebutyl acrylate).

3. Plastic film or coating according to any of the preceding claims, **characterized in**, that it is of a multiple layer type where at least one of the layers contains the crosslinked polyolefin-silane-co-polymer.

4. Plastic film or coating according to claim 3, **characterized in**, that at least one of the other layers contains one heat absorbing material, e.g. EVA (ethylenevinyl acetate), EBA (ethylenebutyl acrylate), PET (polyethylene terephtalate) or PA (polyamide).

5. Plastic film or coating according to any of the preceding claims, **characterized in**, that the polyolefin-silane-co-polymer was crosslinked by the influence of water and a silane condensation catalyst.

6. Plastic film or coating according to any of the preceding claims, **characterized in,** that the plastic film/coating and/or the carrier material produced of a crosslinked polyolefin is provided with an additive of a flameprotective agent.

7. UV-resistant coating according to any of the preceding claims, **characterized in**, that the carrier material wholly or partly consists of a halogen- or phosphorous containing polymer, such as PVC (polyvinyl chloride), PVDC (polyvinylidene chloride), PCTFE (polychlortrifluorethene), PVF (polyvinyl fluoride), PVDF (polyvinylidene fluoride), FEP (perfluorethenepropene) PTFE (polytetrafluoroethylene), or ETFE (polytetrafluorethene).

8. Plastic film or coating according to any of the preceding claims, **characterized in**, that it is pigmented to produce a selective sunlight shielding.

9. Plastic film or coating according to any of the preceding claims, **characterized in**, that it contains as an additive of an anti-fog agent of the type glycerol stearate, glycerol ester or similar to prevent condensation drops.

10. Plastic film or coating according to any of the preceding claims, **characterized in**, that it is of a cellular type, i.e. that the film has closed or opened cavities/ bubbles.

11. Plastic film or coating according to any of the preceding claims, **characterized in**, that the crosslinked polyolefin is mixed with a non-crosslinked polyolefin and /or polyolefin co-polymer.

12. Plastic film or coating according to any of the preceding claims, **characterized in**, that it contains as an additive a UV- stabiliser, particularly a HALS-stabiliser.

13. Plastic film or coating according to any of the preceding claims, **characterized in**, that it contains as an additive a UV-absorbent particularly of the type benzophenon or benzotriazol.

14. A foldable climate protection curtain or awning of that kind which comprises of with each other connected strips, **characterized in**, that the said strips are at least partly composed of a UV-resistant plastic film, which wholly or partly is a crosslinked polyolefin containing silane groups which have been introduced in the polyolefin chain by a co-polymerisation process.

15. A foldable, water proof climate protection curtain or awning of that kind which comprises with each other connected strips and/or yarn threads, **characterized in**, that the curtain on at least one side has a water proof layer wholly or partly containing a crosslinked polyolefin containing silane-groups which have been introduced in the polyolefin chain by a co-polymerisation process.

16. Climate protection curtain according to claim 14 or 15, **characterized in**, that at least some of the strips are light permeable.

17. Climate protection curtain according to claim 14,15 or 16, **characterized in** that the strips are produced by a UV-resistant plastic film with additive of a flame inhibitor.

18. Climate protection curtain according to any or some of the claims 14-17, **characterized in**, that the strips are connected with yarn threads.

## Patentansprüche

1. UV-resistente Kunststoffolie oder -beschichtung auf einem anderen Trägermaterial, insbesondere für die Verwendung als Klimaschutz, z. B. im Gartenbau, insbesondere in Form von Gewächshausrollos, Gewächshausfolien, Abdeckungen für den Freilandanbau, Markisen und dergleichen, dadurch gekennzeichnet, daß sie ganz oder teilweise aus einem vernetzten Polyolefin besteht, das mittels Copolymerisation eingebundene Silangruppen enthält.

2. Kunststoffolie oder -beschichtung nach Anspruch 1, dadurch gekennzeichnet, daß das vernetzte Polyolefin aus einem Polyethylen, insbesondere LDPE und/oder HDPE, oder einem Polyethylen-Copolymer, z. B. EVA oder EBA, besteht.

3. Kunststoffolie oder -beschichtung nach einem der vorhergehenden Ansprüche, dadurch gekennzeichnet, daß sie aus mehreren Schichten aufgebaut ist, von denen zumindest eine das vernetzte Polyolefin-Silan-Copolymer enthält.

4. Kunststoffolie oder -beschichtung nach Anspruch 3, dadurch gekennzeichnet, daß zumindest eine der anderen Schichten ein wärmeabsorbierendes Material, z. B. EVA, EBA, PET oder PA, enthält.

5. Kunststoffolie oder -beschichtung nach einem der vorhergehenden Ansprüche, dadurch gekennzeichnet, daß das Polyolefin-Silan-Copolymer durch den Einfluß von Wasser und eines Silan-Kondensationskatalysators vernetzt wurde.

6. Kunststoffolie oder -beschichtung nach einem der vorhergehenden Ansprüche, dadurch gekennzeichnet, daß die/das aus einem vernetzten Polyolefin hergestellte Kunststofffolie/beschichtung und/oder Trägermaterial einen flammhemmenden Zusatzstoff enthält.

7. UV-resistente Beschichtung nach einem der vorhergehenden Ansprüche, dadurch gekennzeichnet, daß das Trägermaterial ganz oder teilweise aus einem halogen- oder phosphorhaltigen Polymer, wie z. B. PVC, PVDC, PCTFE, PVF, PVDF, FEB, PTFE oder E/TFE, besteht.

8. Kunststoffolie oder -beschichtung nach einem der vorhergehenden Ansprüche, dadurch gekennzeichnet, daß sie Pigmente enthält, um selektiven Sonnenschutz zu ermöglichen.

9. Kunststoffolie oder -beschichtung nach einem der vorhergehenden Ansprüche, dadurch gekennzeichnet, daß sie einen nebelverhütenden Zusatzstoff in der Art von Glyzerinstearat, Glyzerinester oder dergleichen enthält, um der Bildung von Kondenswassertropfen vorzubeugen.

10. Kunststoffolie oder -beschichtung nach einem der vorhergehenden Ansprüche, dadurch gekennzeichnet, daß sie zellig aufgebaut ist, d. h. daß die Folie geschlossene oder offene Hohlräume/Bläschen hat.

11. Kunststoffolie oder -beschichtung nach einem der vorhergehenden Ansprüche, dadurch gekennzeichnet, daß das vernetzte Polyolefin mit einem nicht-vernetzten Polyolefin und/oder Polyolefin-Copolymer gemischt ist.

12. Kunststoffolie oder -beschichtung nach einem der vorhergehenden Ansprüche, dadurch gekennzeichnet, daß sie als Zusatzstoff einen UV-Stabilisator, insbesondere einen HALS-Stabilisator, enthält.

13. Kunststoffolie oder -beschichtung nach einem der vorhergehenden Ansprüche, dadurch gekennzeichnet, daß sie als Zusatzstoff einen UV-Absorber, insbesondere in der Art von Benzophenon oder Benzotriazol enthält.

14. Faltbare(s) Klimaschutzrollo oder -markise der Art, die miteinander verbundene Streifen umfaßt, dadurch gekennzeichnet, daß besagte Streifen zumindest teilweise aus einer UV-resistenten Kunststoffolie bestehen, die ganz oder teilweise aus einem vernetzten Polyolefin besteht, das mittels Copolymerisation eingebundene Silangruppen enthält.

15. Faltbare(s), wasserundurchlässige(s) Klimaschutzrollo oder -markise der Art, die miteinander verbundene Streifen und/oder Fäden umfaßt, dadurch gekennzeichnet, daß das Rollo zumindest auf einer Seite mit einer wasserundurchlässigen Schicht versehen ist, die ganz oder teilweise aus einem vernetzten Polyolefin besteht, das mittels Copolymerisation eingebundene Silangruppen enthält.

16. Klimaschutzrollo nach Anspruch 14 oder 15, dadurch gekennzeichnet, daß zumindest einige der Streifen lichtdurchlässig sind.

17. Klimatschutzrollo nach Anspruch 14, 15 oder 16, dadurch gekennzeichnet, dass die Streifen aus eine UV-resistenten Kunststoffolie gefertigt sind, die eine flammhemmenden Zusatzstoff enthält.

18. Klimatschutzrollo nach einem oder mehreren der Ansprüche 14 bis 17, dadurch gekennzeichnet, dass die Streifen mit Fäden miteinander verbunden sind.

## Revendications

1. Film ou revêtement plastique résistant aux U.V. recouvrant un autre matériau de support, caractérisé en ce qu'il est entièrement ou partiellement composé d'une polyoléfine réticulée contenant des groupes silane qui ont été introduits dans la chaîne de polyoléfine par un procédé de copolymérisation.

2. Film ou revêtement plastique selon la revendication 1, caractérisé en ce que la polyoléfine réticulée est constituée d'un polyéthylène, en particulier du LDPE (polyéthylène à basse densité) et/ou du HDPE (polyéthylène à haute densité), ou un quelconque de ses copolymères, par exemple EVA (éthylène acétate de vinyle) ou EBA (acrylate d'éthylène butyle).

3. Film ou revêtement plastique selon l'une quelconque des revendications précédentes, caractérisé en ce qu'il est de type multicouches dans lequel au moins une des couches contient le copolymère de silane et de polyoléfine réticulé.

4. Film ou revêtement plastique selon la revendication 3, caractérisé en ce que au moins une des autres couches contient un matériau absorbant la chaleur, par exemple EVA (éthylène acétate de vinyle), EBA (acrylate d'éthylène butyle), PET (polyéthylène téréphtalate) ou PA (polyamide).

5. Film ou revêtement plastique selon l'une quelconque des revendications précédentes, caractérisé en ce que le copolymère de silane et de polyoléfine est réticulé par l'influence d'eau et d'un catalyseur de condensation du silane.

6. Film ou revêtement plastique selon l'une quelconque des revendications précédentes, caractérisé en ce que le film ou revêtement plastique et/ou le matériau de support obtenu à partir d'une polyoléfine réticulée est pourvu d'un ajout d'agent antiflammes.

7. Revêtement résistant aux U.V. selon l'une quelconque des revendications précédentes, caractérisé en ce que le matériau de support est entièrement ou partiellement constitué d'un polymère contenant un halogène ou du phosphore, tel que PVC (chlorure de polyvinyle), PVDC (chlorure de polyvinylidène), PCTFE (polychlorotrifluoréthène), PVF (fluorure de polyvinyle), PVDF (fluorure de polyvinylidène), FEP (perfluoroéthènepropène), PTFE (polytétrafluoroéthylène), ou ETFE (polytétrafluoroéthène).

8. Film ou revêtement plastique selon l'une quelconque des revendications précédentes, caractérisé en ce qu'il est pigmenté pour donner une protection solaire sélective.

9. Film ou revêtement plastique selon l'une quelconque des revendications précédentes, caractérisé en ce qu'il contient un ajout d'un agent anti-buée du type stéarate de glycérol, ester de glycérol ou similaire pour empêcher les gouttes de condensation.

10. Film ou revêtement plastique selon l'une quelconque des revendications précédentes, caractérisé en ce qu'il est de type cellulaire, c'est-à-dire que le film a des cavités ou bulles fermées ou ouvertes.

11. Film ou revêtement plastique selon l'une quelconque des revendications précédentes, caractérisé en ce que la polyoléfine réticulée est mélangée avec une polyoléfine non réticulée et/ou un copolymère de polyoléfine.

12. Film ou revêtement plastique selon l'une quelconque des revendications précédentes, caractérisé en ce qu'il contient un ajout d'un stabilisant aux U.V., en particulier un stabilisant HALS.

13. Film ou revêtement plastique selon l'une quelconque des revendications précédentes, caractérisé en ce qu'il contient un additif absorbant les U.V., particulièrement du type benzophénone ou benzotriazole.

14. Rideau ou bâche de protection contre les intempéries repliable du type qui est constitué de bandes reliées les unes aux autres, caractérisé en ce que lesdites bandes sont au moins partiellement composées d'un film plastique résistant aux U.V., qui est entièrement ou partiellement une polyoléfine réticulée contenant des groupes silane qui ont été introduits dans la chaîne de polyoléfine par un procédé de copolymérisation.

15. Rideau ou bâche de protection contre les intempéries repliable imperméable du type qui est constitué de bandes reliées les unes aux autres et/ou de morceaux de fil, caractérisé en ce que le rideau a au moins d'un côté une couche imperméable contenant entièrement ou partiellement une polyoléfine réticulée contenant des groupes silane qui ont été introduits dans la chaîne de polyoléfine par un procédé de copolymérisation.

16. Rideau de protection contre les intempéries selon la revendication 14 ou 15, caractérisé en ce qu'au moins certaines des bandes sont perméables à la lumière.

17. Rideau de protection contre les intempéries selon la revendication 14, 15 ou 16, caractérisé en ce que les bandes sont constituées d'un film plastique résistant aux U.V. avec un additif anti-flammes.

18. Rideau de protection contre les intempéries selon l'une quelconque des revendications 14-17, caractérisé en ce que les bandes sont reliées par des morceaux de fil.
